(19) **Europäisches Patentamt / European Patent Office / Office européen des brevets**

(11) **EP 4 654 268 A1**

(12) **EUROPEAN PATENT APPLICATION**
published in accordance with Art. 153(4) EPC

(43) Date of publication:
**26.11.2025 Bulletin 2025/48**

(21) Application number: **24811339.1**

(22) Date of filing: **16.05.2024**

(51) International Patent Classification (IPC):
*H01M 4/04* (2006.01)    *H01M 4/38* (2006.01)
*H01M 10/052* (2010.01)    *H01M 4/02* (2006.01)

(52) Cooperative Patent Classification (CPC):
Y02E 60/10

(86) International application number:
**PCT/KR2024/006628**

(87) International publication number:
**WO 2024/242400 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.05.2023 KR 20230066491**

(71) Applicant: **LG Energy Solution, Ltd.**
**Seoul 07335 (KR)**

(72) Inventors:
- **HONG, Do Young**
  **Daejeon 34122 (KR)**
- **LEE, Il Ha**
  **Daejeon 34122 (KR)**
- **JOO, Mun Kyu**
  **Daejeon 34122 (KR)**
- **KOO, Dae Ryung**
  **Daejeon 34122 (KR)**
- **CHAE, Jong Hyun**
  **Daejeon 34122 (KR)**
- **KWON, Yo Han**
  **Daejeon 34122 (KR)**

(74) Representative: **Hoffmann Eitle**
**Patent- und Rechtsanwälte PartmbB**
**Arabellastraße 30**
**81925 München (DE)**

(54) **METHOD FOR MANUFACTURING ELECTRODE, ELECTRODE MANUFACTURED THEREBY, AND LITHIUM SECONDARY BATTERY COMPRISING SAME ELECTRODE**

(57)    The present invention relates to a method of preparing an electrode, wherein the preparation method includes a step P1 of disposing a transfer stack, which includes a lithium metal layer having a lithium buffer layer formed on both surfaces thereof, on a preliminary electrode active material layer to form an electrode structure such that the lithium buffer layer and the preliminary electrode active material layer are in contact with each other; a step P2 of rolling the electrode structure; and a step P3 of aging the rolled electrode structure in a nitrogen atmosphere, wherein the nitrogen atmosphere is an atmosphere containing 80 vol% or more of nitrogen.

EP 4 654 268 A1

FIG. 2

**Description**

**TECHNICAL FIELD**

Cross-reference to Related Applications

This application claims priority from Korean Patent Application No.10-2023-0066491, filed on May 23, 2023, the disclosure of which is incorporated by reference herein.

Technical Field

The present invention relates to a method of preparing an electrode, an electrode prepared thereby, and a lithium secondary battery including the electrode.

**BACKGROUND ART**

Requirements for the use of alternative energy or clean energy have increased due to the rapid increase in the use of fossil fuels, and, as a part of this trend, power generation and electricity storage using an electrochemical reaction are the most actively researched areas.

Currently, a typical example of an electrochemical device using the electrochemical energy may be a secondary battery and there is a trend that its usage area is expanding more and more. In recent years, demand for secondary batteries as an energy source has been significantly increased as technology development and demand with respect to portable devices, such as portable computers, mobile phones, and cameras, have increased, and, among these secondary batteries, lithium secondary batteries having high energy density, i.e., high capacity have been subjected to considerable research and have been commercialized and widely used.

In general, a secondary battery is composed of a positive electrode, a negative electrode, an electrolyte, and a separator. The negative electrode includes a negative electrode active material in which lithium ions released from the positive electrode are intercalated and deintercalated, and silicon-based active material particles having large discharge capacity may be used as the negative electrode active material. The silicon-based active material particle may correspond to silicon (Si) or $SiO_x$ (0<x<2). The silicon-based active material particle has an advantage of large theoretical capacity and low price. However, since the silicon-based active material particle has an excessively large volume change during battery operation, it is disadvantageous in that lifetime of the battery is rapidly decreased as the battery is cycled.

Thus, in order to minimize the volume change of the silicon-based active material particle, there is a method of using only a portion of total capacity of the silicon-based active material particles. For this purpose, a so-called pre-lithiation process is used in which lithium ions are intercalated into the negative electrode including the silicon-based active material particles in advance. Specifically, if the lithium ions are intercalated into the negative electrode by a method such as transferring lithium metal to the negative electrode, total capacity of the negative electrode may be reduced to a level of reversible capacity as the lithium ions react at irreversible sites of the negative electrode. Thus, since an amount of the lithium ions intercalated during battery operation may be suitably reduced to a level required for the battery operation, the volume change of the silicon-based active material particles may be minimized.

However, in the process of performing pre-lithiation by disposing the lithium metal on a surface of the negative electrode, excessive heat is generated due to an alloy reaction between lithium and silicon, and a possibility of ignition due to a reaction between the lithium and moisture also increases. Also, in a process of notching and punching the negative electrode, the possibility of ignition may be further increased due to an increased in reaction area between the lithium and the silicon-based active material, and there is a serious safety issue in that there also exists a possibility of ignition caused by pre-lithiated silicon-based active material particles.

Therefore, there is a need for a new technique which may suppress the possibility of excessive heat generation and ignition while improving the lifetime of the battery by intercalating lithium ions into the negative electrode in advance before battery operation.

**DISCLOSURE OF THE INVENTION**

**TECHNICAL PROBLEM**

In performing pre-lithiation by transferring lithium metal to an electrode, because a lithium metal layer having a lithium buffer layer formed on both surfaces thereof is used, an aspect of the present invention provides a method of preparing an electrode which may perform a pre-lithiation reaction in a stable atmosphere while preventing formation of an inactive layer on the surface of the lithium metal layer due to a side reaction of highly reactive lithium, may prevent a decrease in energy density because the lithium buffer layer does not affect an electrode thickness by being decomposed during formation after the pre-lithiation, and may maximize an effect of the pre-lithiation by using the lithium buffer layer as an additional lithium source through the decomposition.

Another aspect of the present invention provides a secondary battery in which life characteristics are improved due to control of an available region of a negative electrode and unique characteristics of a negative electrode active material may be achieved without disadvantages by including an electrode which is prepared by the above preparation method.

## TECHNICAL SOLUTION

In order to solve the above-described tasks, according to an aspect of the present invention, there is provided a method of preparing an electrode which includes: a step P1 of disposing a transfer stack, which includes a lithium metal layer having a lithium buffer layer formed on both surfaces thereof, on a preliminary electrode active material layer to form an electrode structure such that the lithium buffer layer and the preliminary electrode active material layer are in contact with each other; a step P2 of rolling the electrode structure; and a step P3 of aging the rolled electrode structure in a nitrogen atmosphere, wherein the nitrogen atmosphere is an atmosphere containing 80 vol% or more of nitrogen.

In order to solve the above-described tasks, according to another aspect of the present invention, there is provided an electrode including a current collector; an electrode active material layer disposed on the current collector; and a lithium buffer layer disposed on the electrode active material layer, wherein the lithium buffer layer includes at least one of lithium carbonate, lithium oxide, and lithium hydroxide, and does not contain lithium nitride.

In order to solve the above-described tasks, according to another aspect of the present invention, there is provided a lithium secondary battery including a positive electrode, a negative electrode, and a separator disposed between the positive electrode and the negative electrode, wherein the positive electrode or the negative electrode is the above-described electrode.

## ADVANTAGEOUS EFFECTS

Since a method of preparing an electrode according to the present invention uses a lithium metal layer having a lithium buffer layer formed on both surfaces thereof, the method of preparing an electrode according to the present invention is advantageous in that it may solve a problem of increase in resistance by preventing formation of an inactive layer on the surface of the lithium metal layer due to a side reaction of highly reactive lithium, may prevent a decrease in energy density because the lithium buffer layer does not affect an electrode thickness by being decomposed during formation after pre-lithiation, may maximize an effect of the pre-lithiation by using the lithium buffer layer as an additional lithium source through the decomposition, and may reduce process risk which occurs due to a direct contact of lithium metal to a negative electrode.

Also, a lithium secondary battery according to the present invention may increase an available region of the negative electrode by including an electrode which is prepared by the above-described preparation method, and, accordingly, capacity may be increased. Particularly, in a case in which a silicon-based negative electrode active material is used, only a portion of the available region may be used without loss of lithium in a positive electrode due to pre-lithiated lithium, and, accordingly, there is an advantage in that life characteristics may be improved by minimizing a volume change.

## BRIEF DESCRIPTION OF THE DRAWINGS

FIG. 1 is a schematic view illustrating step P1 in a method of preparing an electrode according to an embodiment of the present invention.

FIG. 2 is a schematic view illustrating step P1 using a transfer stack including a polymer layer in the method of preparing an electrode according to the embodiment of the present invention.

FIG. 3 is a schematic view illustrating step P2 in the method of preparing an electrode according to the embodiment of the present invention.

FIG. 4 is a schematic view illustrating step P2' in the method of preparing an electrode according to the embodiment of the present invention.

FIG. 5 is a surface image of an electrode of Example 1-1 which is taken after pre-lithiation according to an embodiment of the present invention.

FIG. 6 is a surface image of an electrode of Comparative Example 1-1 which is taken after pre-lithiation.

FIG. 7 is a surface image of an electrode of Comparative Example 1-4 which is taken after pre-lithiation.

**MODE FOR CARRYING OUT THE INVENTION**

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

$D_{50}$ in the present specification may be defined as a particle diameter at a cumulative volume of 50% in a particle size distribution curve. The $D_{50}$, for example, may be measured by using a laser diffraction method. The laser diffraction method may generally measure a particle diameter ranging from a submicron level to a few mm and may obtain highly repeatable and high-resolution results.

**Method of Preparing Electrode**

A method of preparing an electrode according to the present invention includes a step P1 of disposing a transfer stack, which includes a lithium metal layer having a lithium buffer layer formed on both surfaces thereof, on a preliminary electrode active material layer to form an electrode structure such that the lithium buffer layer and the preliminary electrode active material layer are in contact with each other; a step P2 of rolling the electrode structure; and a step P3 of aging the rolled electrode structure in a nitrogen atmosphere.

According to an embodiment of the present invention, step P1 of the method of preparing an electrode is a step of disposing a transfer stack, which includes a lithium metal layer having a lithium buffer layer formed on both surfaces thereof, on a preliminary electrode active material layer formed on a current collector to form an electrode structure such that the lithium buffer layer and the preliminary electrode active material layer are in contact with each other.

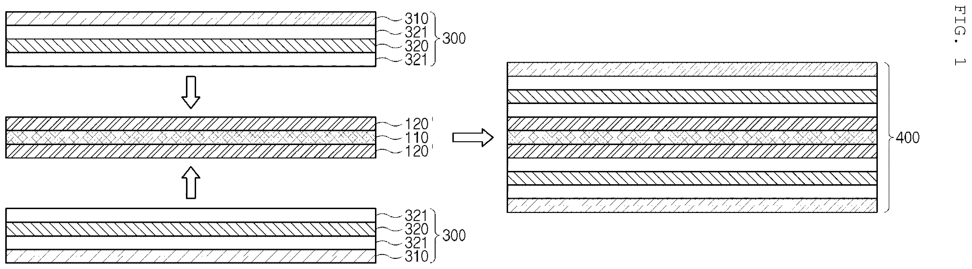

Referring to FIG. 1, a transfer stack 300 includes a lithium metal layer 320, and a lithium buffer layer 321 is formed on both surfaces of the lithium metal layer. Also, the transfer stack 300 may preferably further include a base film 310, wherein, in this case, the transfer stack 300 may include the base film 310 and the lithium metal layer 320 disposed on the base film 310, and may have a structure in which the lithium buffer layer 321 is formed on the both surfaces of the lithium metal layer. The base film 310 may be used without limitation as long as it is a material which may withstand high-temperature conditions that occur in a process of depositing the lithium metal layer 320 on the base film 310. Specifically, the base film may include at least one selected from the group consisting of polyethylene terephthalate (PET), polyimide (PI), poly(methylmethacrylate) (PMMA), polypropylene, polyethylene, and polycarbonate.

According to an embodiment of the present invention, the lithium metal layer plays a role in supplying lithium ions to the preliminary electrode active material layer. Specifically, the preliminary electrode active material layer may be disposed between the electrode current collector and the lithium buffer layer on the lithium metal layer.

The lithium metal layer includes solid-phase lithium metal, and the lithium metal layer may specifically be formed of solid-phase lithium metal. Intercalation may occur from the lithium metal layer into an active material layer by solid-phase diffusion of lithium metal into the electrode active material layer through a series of processes such as transfer, rolling, and aging, and, accordingly, after formation, the lithium metal layer may not exist or may exist in a state in which its thickness is extremely thin.

The lithium metal layer may be formed of solid-phase lithium metal, and the lithium metal is a highly reactive metal, wherein it may react with oxygen ($O_2$), nitrogen ($N_2$), or water vapor ($H_2O$) even in an air atmosphere, and the reaction may cause loss of the lithium metal or may form an inactive layer, such as lithium nitride or lithium oxide, on the surface. The presence of the inactive layer may act as a resistance to cause a problem of degrading output characteristics of a secondary battery, and, since the layer without a special function exists in an electrode, its effect may not be significant at a cell level, but a decrease in energy density may be a problem at a module or pack level.

To solve this problem, since a lithium metal layer having a lithium buffer layer formed on both surfaces thereof is used as the lithium metal layer according to an embodiment of the present invention, the lithium metal layer is not exposed to the outside even if the base film is removed from the electrode structure and the lithium buffer layer is present in an uppermost layer. The lithium buffer layer may include lithium carbonate ($Li_2CO_3$), a main component may be the lithium carbonate, and the lithium buffer layer may further include at least one of lithium oxide (LiO, $Li_2O$) and lithium hydroxide

(LiOH) as a by-product, but it is characterized in that it does not include lithium nitride ($Li_3N$). Specifically, the lithium carbonate may be included in an amount of 80 wt% or more, preferably 85 wt% or more, and more preferably 90 wt% or more or 95 wt% or more in the lithium buffer layer. That the amount of the lithium carbonate is less than the above amount means that an amount of other lithium compounds is relatively increased, wherein, in this case, it may be difficult to expect the above-described effect.

According to an embodiment of the present invention, the lithium buffer layer formed between the lithium metal layer and the base film may significantly reduce possibility of causing a side reaction by preventing the lithium metal layer from being exposed to the air before or after pre-lithiation or in a transfer process, and accordingly, formation of the inactive layer having a main component of lithium nitride and/or lithium oxide on the surface of the lithium metal layer may be prevented.

Also, the lithium carbonate, the main component of the lithium buffer layer, may be decomposed in a formation process after the pre-lithiation, and, since lithium generated during the decomposition may be used as an additional lithium source, there is an advantage of contributing to improve capacity and lifetime of the battery. Furthermore, since there is no transfer stack used for the pre-lithiation which remains on the electrode after the formation process, it may not affect an electrode thickness at all, and thus, an improvement of energy density at the module or pack level may be expected.

The lithium buffer layer may include lithium oxide and/or lithium hydroxide, wherein they may be compounds that are inevitably generated when forming the lithium buffer layer on the lithium metal layer.

Furthermore, the lithium nitride is characterized in that it is not included in the lithium buffer layer, wherein the lithium nitride has a property of not being easily decomposed even after a few tens or hundreds of cycles due to its higher stability than other lithium compounds, may fix lithium in a large proportion to cause a large loss of the lithium, and may be a problematic compound that may degrade the output characteristics by acting as a resistance. Accordingly, the lithium nitride may not be included in the lithium buffer layer according to an embodiment of the present invention, and the lithium nitride may be appropriately controlled by a surface treatment of the lithium metal layer in the preparation of the transfer stack.

According to an embodiment of the present invention, the transfer stack may be prepared by a method including a step (S1) of forming the lithium buffer layer by surface treating both surfaces of the lithium metal layer. Also, in a case in which the transfer stack includes the base film, the transfer stack may be prepared by a method further including a step (S2) of disposing the base film on any one of the lithium buffer layers.

The method of surface treating the both surfaces of the lithium metal layer may be a method in which, when a film is formed by depositing lithium, after the deposition of the lithium to a desired thickness is completed after inducing a reaction with the lithium by creating a mixed gas atmosphere of $CO_2$ and Ar at the beginning of the deposition, the mixed gas atmosphere is created again, and, as another method, a lithium buffer layer containing lithium carbonate as a main component may be simultaneously formed on both surfaces of a lithium metal film by introducing the lithium metal film into a vacuum chamber and creating the mixed gas atmosphere. The mixed gas may be a mixture of $CO_2$ and Ar in a volume ratio of about 3:97 to about 40:60, and the volume ratio may preferably be in a range of 5:95 to 30:70, more preferably, 5:95 to 20:80.

According to an embodiment of the present invention, a thickness of the lithium buffer layer may be 50 nm or less, and the thickness may be controlled to an appropriate level by adjusting conditions of the above method. In a case in which the thickness of the lithium buffer layer is 50 nm or less, the lithium buffer layer may act as a lithium source at a level that may be decomposed through the formation, and the side reaction of the lithium metal layer may be effectively prevented.

According to an embodiment of the present invention, in the transfer stack, a thickness of the lithium metal layer may be in a range of 1 $\mu$m to 10 $\mu$m, specifically 3 $\mu$m to 9 $\mu$m, and more specifically 4 $\mu$m to 6.5 $\mu$m. In a case in which the above range is satisfied, since a degree of cracking of positive electrode active material particles on a surface of a positive electrode may be reduced and an explosive reaction at a negative electrode may be prevented in advance, a decrease in initial capacity of the battery may be suppressed.

According to an embodiment of the present invention, a loading amount (unit: mAh/cm$^2$) of the lithium metal layer may be 4% to 40% of a loading amount (unit: mAh/cm$^2$) of the preliminary electrode active material layer, and may specifically be 12% to 35%, more specifically, 20% to 30%. When the above range is satisfied, since the generation of the by-product is small and lithium may be easily intercalated into the electrode active material, target lithium intercalation capacity may be easily achieved.

According to an embodiment of the present invention, in step P1, referring to FIG. 1, a preliminary electrode active material layer 120' is disposed on an electrode current collector 110, and the transfer stack 300 may be disposed on the preliminary electrode active material layer 120' to form an electrode structure 400 such that the lithium buffer layer 321 and the preliminary electrode active material layer are in contact with each other.

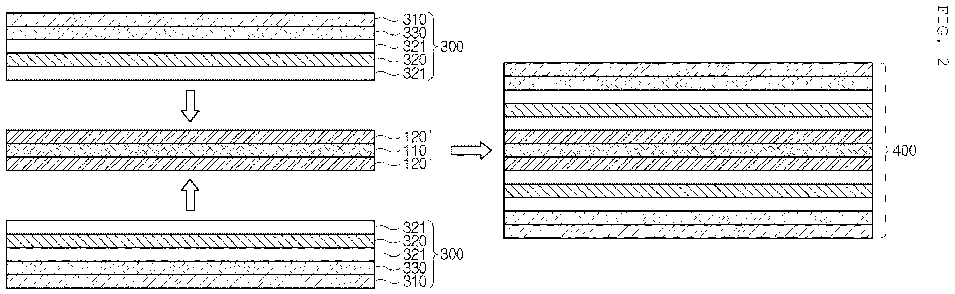

Referring to FIG. 2, the transfer stack 300 according to an embodiment of the present invention may further include a polymer layer 330. The polymer layer 330 may be disposed on the lithium buffer layer 321. The polymer layer may play a role in effectively peeling off the lithium metal layer from the transfer stack and allowing the lithium metal layer to be easily transferred to the electrode active material layer during the preparation of the electrode. That is, the polymer layer may be separated from the transfer stack together with the lithium metal layer to be disposed on the electrode active material layer. The polymer layer may exist in contact with the electrode active material layer, and alternatively, in a case in which the entire lithium metal layer is not transferred to the electrode active material layer, the lithium metal layer may exist between the polymer layer and the electrode active material layer.

The polymer layer may be at least one selected from the group consisting of polyethylene terephthalate (PET), polyimide (PI), poly(methylmethacrylate) (PMMA), polypropylene, polyethylene, and polycarbonate. Accordingly, in a secondary battery including the electrode, since the polymer layer may be dissolved in an electrolyte solution contained in the secondary battery, an increase in resistance of the battery may be prevented. Particularly, the polymer layer may include PMMA, and, in this case, the above-described effect may be further improved.

The polymer layer may have a thickness of 0.1 $\mu$m to 10 $\mu$m, particularly 0.5 $\mu$m to 5 $\mu$m, and more particularly 1 $\mu$m to 2.5 $\mu$m. In a case in which the above range is satisfied, the lithium metal layer may be easily transferred to the electrode active material layer, and a reverse transfer phenomenon, in which the electrode active material layer is transferred to the transfer stack, may be prevented.

According to an embodiment of the present invention, step P2 of the method of preparing an electrode is a step of rolling the electrode structure.

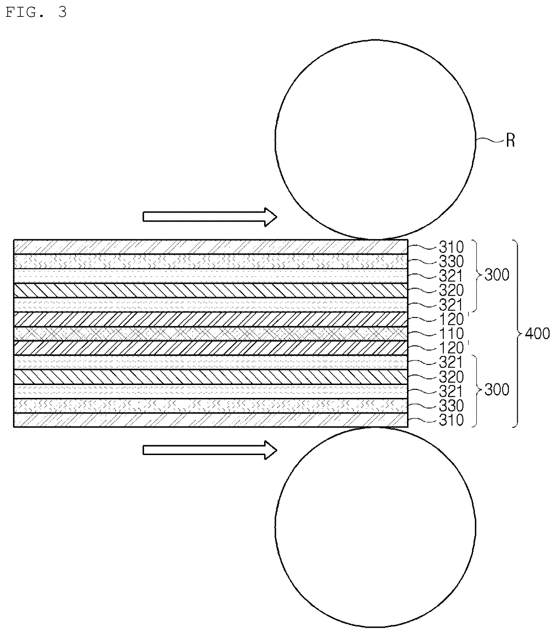

Referring to FIG. 3, in step P2, the prepared electrode structure 400 may be rolled. The rolling may be performed by a roll press method. Specifically, through two rolls R spaced apart from each other with a predetermined space in a vertical direction, a pressure may be applied in the vertical direction to the electrode structure 400 passing through the space, and the pressure may be a linear pressure. Through the rolling process, the lithium metal layer included in the transfer stack may be fixed as a layer in the electrode structure and at least a portion of the lithium may begin to be intercalated into the preliminary electrode active material layer.

The pressure applied to the electrode structure during the rolling may be in a range of 10 kgf/cm to 90 kgf/cm, particularly 15 kgf/cm to 80 kgf/cm, and more particularly 20 kgf/cm to 40 kgf/cm.

In a case in which the rolling pressure is applied within the above range, the lithium metal layer may be effectively transferred. Accordingly, an effect, which may satisfy both lifetime improvement and capacity characteristics at the same time, may be achieved.

According to an embodiment of the present invention, in a case in which the transfer stack 300 includes the base film 310, the method of preparing an electrode may further include a step of removing the base film from the electrode structure after the rolling of step P2.

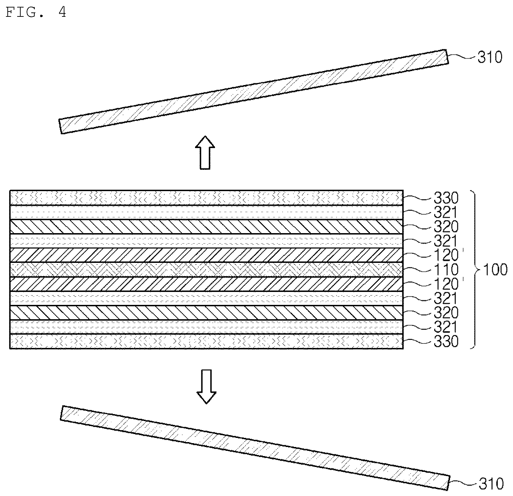

Referring to FIG. 4, in step P2', an electrode 100 may be prepared by removing the base film 310 from the electrode structure after the rolling performed in step P2. In a case in which the polymer layer 330 is disposed on the lithium buffer layer 321, the polymer layer 330 is disposed between the base film 310 and the lithium buffer layer 321, and the base film 310 may be more easily removed by the polymer layer 330.

According to an embodiment of the present invention, the method of preparing an electrode includes a step P3 of aging the rolled electrode structure in a nitrogen atmosphere.

The aging may be a step of resting (being left standing) for 1 minute to 600 minutes, specifically, 1 minute to 30 minutes in a nitrogen atmosphere, and the nitrogen atmosphere in this case may have a concentration of nitrogen of 80 vol% or more, or 85 vol% or more, preferably, 90 vol% or more, and the aging may be performed at 15°C to 40°C, and may be performed at a temperature of preferably 17°C or higher, or 20°C or higher, preferably 35°C or less, more preferably 30°C or less, or 28°C or less. In the above aging conditions, since an explosive pre-lithiation reaction is effectively controlled by using the nitrogen atmosphere, stability, in which the reaction may be performed stably by significantly reducing fire risk, may be expected, wherein, furthermore, since the lithium buffer layer prevents formation of lithium nitride on a surface of the lithium metal even if the nitrogen atmosphere is used, there is an advantage in that a problem of increase in resistance, which occurs due to the formation of the lithium nitride, may be prevented.

### Electrode

An electrode according to the present invention is characterized in that it includes a current collector; an electrode active material layer disposed on the current collector; and a lithium buffer layer disposed on the electrode active material layer, wherein the lithium buffer layer includes at least one of lithium carbonate, lithium oxide, and lithium hydroxide, and does not contain lithium nitride.

Specifically, the electrode is derived from an electrode structure comprising a transfer stack including a lithium metal layer having the lithium buffer layer formed on both surfaces thereof; and a preliminary electrode including the current collector and a preliminary electrode active material layer disposed on the current collector, and may be disposed such that the lithium buffer layer of the transfer stack and the preliminary electrode active material layer of the preliminary electrode are disposed to be in contact with each other.

According to an embodiment of the present invention, the electrode may be a positive electrode, and the positive electrode includes a positive electrode active material layer. The positive electrode active material layer may itself constitute the positive electrode, but the positive active material layer may be disposed on a positive electrode collector, and the positive electrode active material layer may be disposed on one surface or both surfaces of the positive electrode collector.

According to an embodiment of the present invention, the positive electrode collector is not particularly limited as long as it has conductivity without causing adverse chemical changes in a battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 $\mu$m to 500um, and microscopic irregularities may be formed on the surface of the collector to improve adhesion of the positive electrode active material. The positive electrode collector, for example, may be used in various shapes such as that of a film, a sheet, a foil, a net, a porous body, a foam body, a non-woven fabric body, and the like.

According to an embodiment of the present invention, the positive electrode active material layer includes a positive electrode active material, and the positive electrode active material is a material capable of causing an electrochemical reaction, wherein it may be a lithium transition metal oxide. For example, the positive electrode active material may include at least one selected from the group consisting of a layered compound, such as a lithium cobalt oxide or a lithium nickel oxide, which is substituted with at least one transition metal; a lithium manganese oxide substituted with at least one transition metal; a lithium nickel-based oxide represented by $Li[Ni_{1-y}M^1_y]O_2$ (where, $M^1$ is at least one selected from cobalt (Co), manganese (Mn), aluminum (Al), copper (Cu), iron (Fe), magnesium (Mg), boron (B), chromium (Cr), zinc (Zn), and gallium (Ga), and $0.01 \leq y \leq 0.7$); a lithium nickel cobalt manganese composite oxide represented by $Li_{1+z}[Ni_bMn_cCo_{1-(b+c+d)}M^2_d]O_{(2-e)}A_e$ (where, $M^2$ is at least one selected from the group consisting of Al, Mg, Cr, titanium (Ti), silicon (Si), and yttrium (Y), A is at least one selected from the group consisting of fluorine (F), phosphorus (P), and chlorine (Cl), and $-0.5 \leq z \leq 0.5$, $0.1 \leq b \leq 0.8$, $0.1 \leq c \leq 0.8$, $0 \leq d \leq 0.2$, $0 \leq e \leq 0.2$, and $b+c+d<1$); and an olivine-based lithium metal phosphate represented by $Li_{1+x}[M^3_{1-q}M^4_q]PO_{4-r}X_r$ (where, $M^3$ is at least one selected from the group consisting of Fe, Mn, Co, and nickel (Ni), $M^4$ is at least one selected from the group consisting of Al, Mg, and Ti, X is at least one selected from the group consisting of F, sulfur (S), and nitrogen (N), and $-0.5 \leq x \leq 0.5$, $0 \leq q \leq 0.5$, and $0 \leq r \leq 0.1$).

Specifically, the positive electrode active material may be composed of the lithium nickel-based oxide, the lithium nickel cobalt manganese composite oxide, the olivine-based lithium metal phosphate, or a combination thereof, and these may be combined to configure the positive electrode active material layer as one layer or a separate layer.

According to an embodiment of the present invention, more specifically, the positive electrode active material may include a compound of Formula 1 below, and may more specifically be the compound of Formula 1 below.

[Formula 1]      $Li_{1+x}[Ni_aCo_bMn_cM^1_{(1-a-b-c)}]O_{(2-d)}A_d$

In Formula 1,

$M^1$ is at least one selected from the group consisting of Al, Mg, Cr, Ti, Si, and Y, and may specifically be Al.
A is at least one selected from the group consisting of F, P, And Cl, and may specifically be F.
x may satisfy $-0.5 \leq x \leq 0.5$, specifically, $-0.3 \leq x \leq 0.3$.
a may satisfy $0.6 \leq a < 1$, specifically, $0.7 \leq a \leq 0.9$.
b may satisfy $0.03 \leq b \leq 0.1$, specifically, $0.05 \leq b \leq 0.1$.
c may satisfy $0.03 \leq c \leq 0.1$, specifically, $0.05 \leq c \leq 0.1$.
d may satisfy $0 \leq d \leq 0.1$, specifically, $0 \leq d \leq 0.05$.
a, b, and c satisfy $0 < a+b+c \leq 1$, specifically, $a+b+c=1$.

The compound of Formula 1 may be in the form of a particle.

The compound of Formula 1 may be in a form of a secondary particle in which a plurality of primary particles are bonded to each other. Specifically, the compound of Formula 1 may be in the form of a secondary particle in which 10 or more primary particles are bonded to each other. Accordingly, there is an effect that lithium may be uniformly intercalated into and deintercalated from the positive electrode active material.

The compound of Formula 1 may have a $D_{50}$ of 5 $\mu$m to 15 $\mu$m, particularly 7 $\mu$m to 12 $\mu$m, and more particularly 9 $\mu$m to 10 $\mu$m. The $D_{50}$ may be a $D_{50}$ of the secondary particle. Since a positive electrode slurry is easily dispersed when the above range is satisfied, uniform coating of the positive electrode active material layer is possible.

The positive electrode active material may be included in an amount of 90 wt% to 99 wt%, particularly 92 wt% to 98 wt%, and more particularly 95 wt% to 98 wt% in the positive electrode active material layer.

According to an embodiment of the present invention, the positive electrode active material layer may further include a positive electrode binder. The positive electrode binder improves adhesion between the positive electrode active material particles and adhesion between the positive electrode active material and the positive electrode collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber (SBR), a fluorine rubber, or various copolymers thereof, and any one thereof or a mixture of two or more thereof may be used.

The positive electrode binder may be included in an amount of 0.5 wt% to 5.0 wt%, particularly 1.0 wt% to 2.5 wt%, and more particularly 1.0 wt% to 2.0 wt% in the positive electrode active material layer.

According to an embodiment of the present invention, the positive electrode active material layer may further include a positive electrode conductive agent. The positive electrode conductive agent is used to provide conductivity to the electrode, wherein any conductive agent may be used without particular limitation as long as it has suitable electron conductivity without causing adverse chemical changes in the battery. Specific examples of the positive electrode conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used.

The positive electrode conductive agent may be included in an amount of 0.5 wt% to 30.0 wt%, particularly 0.5 wt% to 10.0 wt%, and more particularly 1.0 wt% to 4.0 wt% in the positive electrode active material layer.

According to an embodiment of the present invention, in the positive electrode, the positive electrode active material layer may have a porosity of 10% to 40%, particularly 15% to 35%, and more particularly 25% to 30%. In this case, no additional thickness change may occur during rolling.

According to an embodiment of the present invention, the electrode may be a negative electrode, the negative electrode includes a negative electrode active material layer, the negative electrode active material layer may include a negative electrode active material, and a silicon-based negative electrode active material, a carbon-based negative electrode active material, or a combination thereof may be used as the negative electrode active material.

According to an embodiment of the present invention, the negative electrode active material may include a silicon-based negative electrode active material. The silicon-based negative electrode active material may include at least one of Si and $SiO_x$ (0<x<2).

The Si is silicon particles, wherein it may be silicon particles (particles formed of silicon), so-called Pure Silicon. The silicon particles may effectively improve the capacity of the negative electrode. The $SiO_x$ (0<x<2) may be in a form including Si and $SiO_2$, and the Si may constitute a phase. That is, x corresponds to a number ratio of oxygen (O) to Si included in the $SiO_x$ (0<x<2). In a case in which the silicon-based composite particle includes the $SiO_x$ (0<x<2), discharge capacity of the secondary battery may be improved.

According to an embodiment of the present invention, the silicon-based negative electrode active material has a problem of extremely poor life characteristics due to extreme volume changes during battery operation, but, in a case in which it is combined with the positive electrode according to the method of preparing an electrode of the present invention, since excess lithium ions, not lithium in the positive electrode active material which determines capacity, are transferred to the silicon-based negative electrode active material during the formation from the pre-lithiated positive electrode to react with the silicon-based negative electrode active material in advance, an irreversible phase is formed to reduce the available region, and, accordingly, the volume changes during battery operation are not severe so that the lifetime may be significantly improved and high capacity characteristics, which are inherent characteristics of the silicon-based negative electrode active material, may be sufficiently achieved. Furthermore, even in a case in which the preparation method according to an embodiment of the present invention is applied to the silicon-based negative electrode active material itself, since it is possible to control the pre-lithiation reaction through the lithium buffer layer while obtaining the same effect as described above, risk caused by an alloy reaction between existing lithium and silicon may be reduced.

According to an embodiment of the present invention, the negative electrode active material may further include a carbon-based negative electrode active material. The carbon-based negative active material may include at least one selected from the group consisting of artificial graphite, natural graphite, and graphitized meso-carbon microbeads.

According to an embodiment of the present invention, the negative electrode active material layer may further include a negative electrode binder. The negative electrode binder may include at least one selected from the group consisting of polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylate, an ethylene-propylene-diene monomer (EPDM), a sulfonated EPDM, a styrene-butadiene rubber (SBR), a fluorine rubber, poly acrylic acid, and a material having hydrogen thereof substituted with lithium (Li), sodium (Na), or calcium (Ca), or may include various copolymers thereof.

According to an embodiment of the present invention, the negative electrode active material layer may further include a negative electrode conductive agent. The negative electrode conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; conductive tubes such as carbon nanotubes; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

In the electrode according to an embodiment of the present invention, the lithium metal layer is disposed on the electrode through a transfer method, and lithium of the lithium metal layer is intercalated into the electrode active material layer by solid-phase diffusion by rolling. The lithium may play a role in reducing the available region of the negative electrode.

Thus, since an available range of negative electrode capacity may be reduced without loss of lithium in the positive electrode active material due to the pre-lithiated lithium, an excessive volume change of a silicon-based active material may particularly be suppressed and life characteristics of the battery may be improved. Also, since the capacity of the positive electrode active material may be used in an entire range, there is an advantage in that battery efficiency is increased and energy density may also be maximized.

The positive electrode according to an embodiment of the present invention is characterized in that pre-lithiation is not performed by typically contacting the lithium metal layer to the negative electrode, but the lithium metal layer is transferred to the positive electrode and rolled and the lithium ions intercalated into the positive electrode are then transferred to the negative electrode in the formation process of the battery.

The electrode according to the embodiment of the present invention may be a positive electrode or a negative electrode, preferably a negative electrode, and more preferably a negative electrode in which a silicon-based active material is used as the negative electrode active material, and the silicon-based active material may specifically be silicon (Pure Si).

## Lithium Secondary Battery

A lithium secondary battery according to the present invention includes a positive electrode, a negative electrode, and a separator disposed between the positive electrode and the negative electrode, wherein the positive electrode or the negative electrode is prepared by the above-described method.

Since the positive electrode and the negative electrode have been previously described, descriptions thereof will be omitted.

According to an embodiment of the present invention, the secondary battery includes the separator. The separator separates the negative electrode and the positive electrode and provides a movement path of lithium ions, wherein any separator may be used as the separator without particular limitation as long as it is typically used in a secondary battery, and particularly, a separator having high moisture-retention ability for an electrolyte as well as low resistance to the transfer of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

According to an embodiment of the present invention, the secondary battery may further include an electrolyte. The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include a nonaqueous organic solvent and a metal salt. Examples of the nonaqueous organic solvent may be aprotic organic solvents, such as N-methyl-2-pyrrolidone, propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, diemthylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

Particularly, ethylene carbonate and propylene carbonate, ring-type carbonates among the carbonate-based organic solvents, well dissociate a lithium salt in the electrolyte solution due to high dielectric constants as high-viscosity organic solvents, and thus, the ring-type carbonate may be preferably used. It is more preferable that the ring-type carbonate is mixed with low-viscosity, low-dielectric constant linear carbonate, such as dimethyl carbonate and diethyl carbonate, in an appropriate ratio since an electrolyte solution having high electrical conductivity may be prepared.

A lithium salt may be used as the metal salt, and the lithium salt is a material that is readily soluble in the nonaqueous electrolyte solution, wherein, for example, at least one selected from the group consisting of $F^-$, $Cl^-$, $I^-$, $NO_3^-$,

$N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$ may be used as an anion of the lithium salt.

At least one additive, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above-described electrolyte components for the purpose of improving the life characteristics of the battery, suppressing a decrease in battery capacity, and improving discharge capacity of the battery.

As described above, since the secondary battery including the positive electrode according to the present invention stably exhibits excellent capacity and capacity retention, the secondary battery is suitable for portable devices, such as mobile phones, notebook computers, and digital cameras, and electric cars such as hybrid electric vehicles (HEVs).

Accordingly, according to another embodiment of the present invention, a battery module including the secondary battery as a unit cell and a battery pack including the battery module are provided.

The battery module and the battery pack may be used as a power source of at least one medium and large sized device selected from a power tool; an electric vehicle (EV); a hybrid electric vehicle; a plug-in hybrid electric vehicle (PHEV);or a power storage system.

## Examples

Hereinafter, preferred examples will be provided for better understanding of the present invention. It will be apparent to those skilled in the art that these examples are only provided to illustrate the present invention and various modifications and alterations are possible within the scope and technical spirit of the present invention. Such modifications and alterations fall within the scope of claims included herein.

## Electrode Preparation

### Example 1-1: Preparation of Negative Electrode

Lithium metal was placed in a vacuum chamber such that both surfaces thereof were exposed, and a mixed gas atmosphere of 95 vol% Ar and 5 vol% $CO_2$ was created at room temperature (about 25°C) to form a lithium buffer layer with a thickness of 50 nm on the surfaces. The lithium buffer layer was analyzed through X-ray photoelectron spectroscopy (XPS) (Nexsa ESCA System, Thermo Fisher Scientific (ESCA-02)), wherein the lithium buffer layer contained 35 vol% Li, 25 vol% C, and 40 vol% O, and thus, it was confirmed that lithium carbonate was a main component.

A transfer stack, which included a PET film (base film), a polymer layer (1 $\mu$m thick) disposed on the PET film and formed of PMMA, and a lithium metal layer (6.2 $\mu$m thick, loading amount of 1.28 mAh/cm$^2$) having the lithium buffer layer formed on both surfaces thereof which was disposed on the polymer layer and formed of solid-phase lithium metal, was prepared.

Silicon particles having an average particle diameter $D_{50}$ of 5$\mu$m was used as a negative electrode active material. A negative electrode, which included a preliminary negative electrode active material layer including the negative electrode active material, carboxymethyl cellulose (CMC) as a negative electrode binder, and carbon nanotubes, as a negative electrode conductive agent, at a weight ratio of 80:10:10, was prepared. The preliminary negative electrode active material layer had a loading amount of 10 mAh/cm$^2$ and a thickness of 75um.

The transfer stack was disposed on the preliminary negative electrode active material layer to allow the lithium buffer layer to be in contact with the preliminary negative electrode active material layer, and, after they were rolled by a roll press method, aging was performed at room temperature for 120 minutes in an atmosphere containing 90 vol% nitrogen to allow lithium to be intercalated into the negative electrode active material layer.

### Example 1-2: Preparation of Negative Electrode

A pre-lithiated negative electrode was prepared in the same manner except that, when preparing the transfer stack, the thickness of the lithium metal layer was set to about 4 $\mu$m(loading amount of 0.82 mAh/cm$^2$).

### Example 1-3: Preparation of Negative Electrode

A pre-lithiated negative electrode was prepared in the same manner except that the thickness of the lithium buffer layer formed on both surfaces of the lithium metal layer was set to about 30 nm by controlling time during which the lithium metal layer was exposed to the mixed gas atmosphere.

### Comparative Example 1-1: Preparation of Negative Electrode

A negative electrode was prepared in the same manner as in Example 1-1 except that a lithium metal layer without a lithium buffer layer was used.

### Comparative Example 1-2: Preparation of Negative Electrode

A negative electrode was prepared in the same manner as in Example 1-1 except that a lithium metal layer without a lithium buffer layer was used and an air atmosphere (about 78 vol% nitrogen), instead of the nitrogen atmosphere, was used during the aging.

### Example 1-4: Preparation of Positive Electrode

A transfer stack was prepared in the same manner as in Example 1-1.

$Li[Ni_{0.86}Co_{0.05}Mn_{0.08}Al_{0.01}]O_2$ was used as a positive electrode active material. The positive electrode active material was in a form of a secondary particle in which a plurality (10 or more) of $Li[Ni_{0.86}Co_{0.05}Mn_{0.08}Al_{0.01}]O_2$ primary particles were bonded to each other, and an average particle diameter $D_{50}$ of the secondary particles was 9 $\mu$m. A positive electrode, which included a preliminary positive electrode active material layer including the positive electrode active material, PVdF as a positive electrode binder, and carbon nanotubes, as a positive electrode conductive agent, at a weight ratio of 98:1:1 and an aluminum foil (thickness: 12 $\mu$m) as a positive electrode collector, was prepared. The preliminary positive electrode active material layer had a loading amount of 4.5 mAh/cm$^2$ and a thickness of 140 $\mu$m.

The transfer stack was disposed on the preliminary positive electrode active material layer to allow the lithium buffer layer to be in contact with the preliminary positive electrode active material layer, and, after they were rolled by a roll press method, aging was performed at room temperature for 120 minutes in an atmosphere containing 90 vol% nitrogen to allow lithium to be intercalated into the positive electrode active material layer.

### Example 1-5: Preparation of Positive Electrode

A pre-lithiated positive electrode was prepared in the same manner except that, when preparing the transfer stack, the thickness of the lithium metal layer was set to about 4 $\mu$m (loading amount of 0.82 mAh/cm$^2$).

### Example 1-6: Preparation of Positive Electrode

A pre-lithiated positive electrode was prepared in the same manner except that the thickness of the lithium buffer layer formed on both surfaces of the lithium metal layer was set to about 30 nm by controlling time during which the lithium metal layer was exposed to the mixed gas atmosphere.

### Comparative Example 1-3: Preparation of Positive Electrode

A positive electrode was prepared in the same manner as in Example 1-2 except that a lithium metal layer without a lithium buffer layer was used.

### Comparative Example 1-2: Preparation of Positive Electrode

A positive electrode was prepared in the same manner as in Example 1-2 except that a lithium metal layer without a lithium buffer layer was used and an air atmosphere (about 78 vol% nitrogen), instead of the nitrogen atmosphere, was used during the aging.

### Experimental Example 1: Pre-lithiation Reaction Evaluation

For pre-lithiation reactions of Examples 1-1 to 1-6 and Comparative Examples 1-1 to 1-4, peak temperatures of the reactions and time for lithium nitride to form were measured and presented in Table 1 below.

1) Peak temperature (°C): The peak temperature is the highest reaction temperature recorded during the pre-lithiation reaction.

2) Lithium nitride formation time (min): The lithium nitride formation time is time when a surface of the electrode starts to show green light during the reaction by performing the pre-lithiation reaction without removing the polymer layer (release layer) from the electrode structure. When lithium nitride is formed on the surface of the electrode, green light appears due to the polymer layer on the surface. Changes in status of the electrode were confirmed for up to 7 days for the electrode whose surface color did not change to green during the pre-lithiation reaction.

[Table 1]

| | Electrode | Peak temperature (°C) | Lithium nitride formation time |
|---|---|---|---|
| Example 1-1 | Negative electrode | 28 | >120min |
| Example1-2 | Negative electrode | 27 | >120min |
| Example 1-3 | Negative electrode | 29 | >120min |
| Comparative Example 1-1 | Negative electrode | 45 | <10min (entire surface) |
| Comparative Example1-2 | Negative electrode | >60 | <10min (entire surface) |
| Example1-4 | Positive electrode | 28 | >120min |
| Example1-5 | Positive electrode | 28 | >120min |
| Example1-6 | Positive electrode | 29 | >120min |
| Comparative Example1-3 | Positive electrode | 40 | <10min (entire surface) |
| Comparative Example1-4 | Positive electrode | 52 | <10min (portion) |

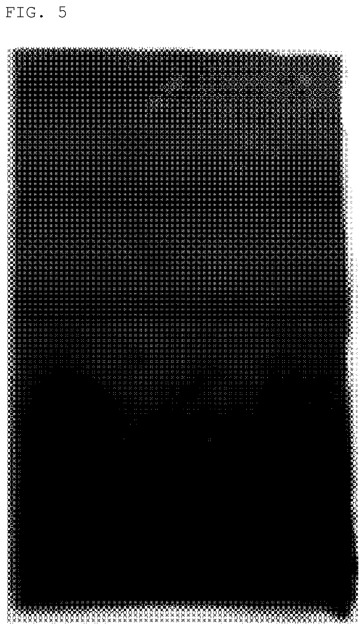

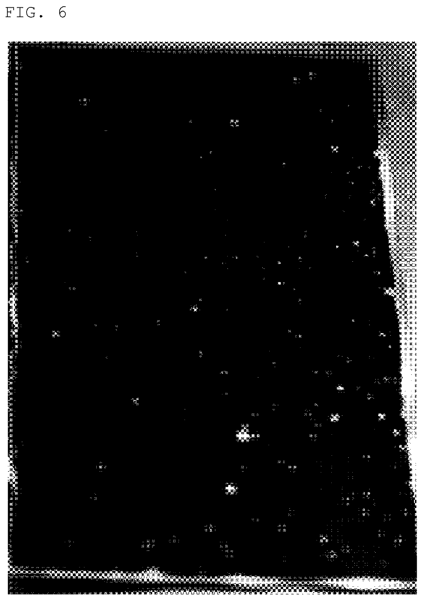

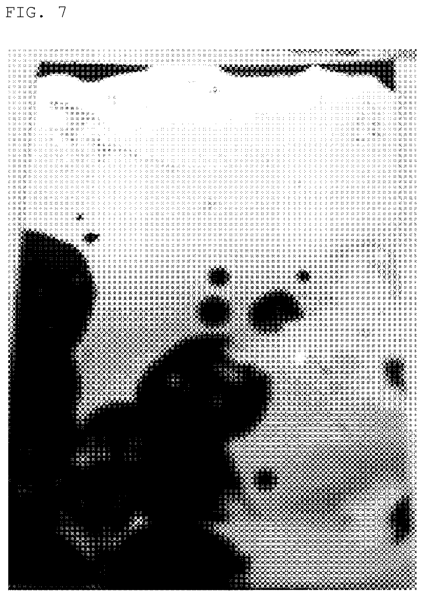

Referring to Table 1, with respect to the examples, lithium nitride was not formed during the reaction, and, as a result of observation during continued storage, it was confirmed that a green light was not confirmed even after about 7 days as in FIG. 5 and a purple light was shown due to the surface polymer layer, and it may be understood that the pre-lithiation reaction proceeded very stably in a room temperature range. However, with respect to Comparative Examples 1-1 and 1-3, it may be confirmed that the peak temperature of the pre-lithiation reaction was relatively high because the lithium metal layer was not subjected to a surface treatment, it may be observed that lithium nitride was formed only 10 minutes after the start of the reaction, and it may be confirmed that greenish lithium nitride was formed on the entire surface of the electrode of Comparative Example 1-1 according to FIG. 6. Also, Comparative Examples 1-2 and 1-4 were cases in which pre-lithiation was performed under general atmospheric conditions without a surface treatment, wherein, with respect to Comparative Example 1-2 as the negative electrode, the reaction was stopped when the reaction temperature was greater than 60°C due to the risk of explosion during the pre-lithiation reaction, and, with respect to Comparative Example 1-4, the pre-lithiation reaction progressed to a somewhat dangerous level, formation of lithium nitride was observed on a portion of the surface of the electrode only 10 minutes after the start of the reaction, and, as confirmed in FIG. 7, it may be understood that greenish lithium nitride was formed on a portion of the surface.

**Preparation of Lithium Secondary Batteries**

**Examples 2-1 and 2-2 and Comparative Examples 2-1 and 2-2: Preparation of Lithium Secondary Batteries**

Li[Ni$_{0.86}$Co$_{0.05}$Mn$_{0.08}$Al$_{0.01}$]O$_2$ was used as a positive electrode active material. The positive electrode active material was in a form of a secondary particle in which a plurality (10 or more) of Li [Ni$_{0.86}$Co$_{0.05}$Mn$_{0.08}$Al$_{0.01}$]O$_2$ primary particles were bonded to each other, and an average particle diameter $D_{50}$ of the secondary particles was 9 $\mu$m. A positive electrode, which included a positive electrode active material layer including the positive electrode active material, PVdF as a positive electrode binder, and carbon nanotubes, as a positive electrode conductive agent, at a weight ratio of 98:1:1 and an aluminum foil (thickness: 12 $\mu$m) as a positive electrode collector, was prepared. The positive electrode active material layer had a loading amount of 4.5 mAh/cm$^2$ and a thickness of 140 $\mu$m.

Each of the negative electrodes of Examples 1-1 and 1-2 and Comparative Examples 1-1 and 1-2, the positive electrode, and a porous polyethylene separator were assembled for each example and comparative example using a winding method, and a preliminary lithium ion secondary battery was prepared by injecting an electrolyte (ethylene carbonate (EC)/ethylmethyl carbonate (EMC) = 3/7 (volume ratio) and lithium hexafluorophosphate (LiPF$_6$ 1 mol) into the assembled battery.

The preliminary lithium ion secondary battery was charged at a C-rate of 0.1C to 4.2V and then discharged to 2.5V to perform a formation process.

**Examples 2-4 and 2-5 and Comparative Examples 2-3 and 2-4: Preparation of Lithium Secondary Batteries**

Silicon particles having an average particle diameter $D_{50}$ of 5μm was used as a negative electrode active material. A negative electrode, which included a preliminary negative electrode active material layer including the negative electrode active material, carboxymethylcellulose (CMC) as a negative electrode binder, and carbon nanotubes, as a negative electrode conductive agent, at a weight ratio of 80:10:10, was prepared. The preliminary negative electrode active material layer had a loading amount of 10 mAh/cm$^2$ and a thickness of 75um.

Each of the positive electrodes of Examples 1-4 and 1-5 and Comparative Examples 1-3 and 1-4, the negative electrode, and a porous polyethylene separator were assembled for each example and comparative example using a winding method, and a preliminary lithium ion secondary battery was prepared by injecting an electrolyte (ethylene carbonate (EC) /ethylmethyl carbonate (EMC) = 3/7 (volume ratio) and lithium hexafluorophosphate (LiPF$_6$ 1 mol) into the assembled battery.

The preliminary lithium ion secondary battery was charged at a C-rate of 0.1C to 4.2V and then discharged to 2.5V to perform a formation process.

**Experimental Example 2: Resistance and Life Characteristics Evaluation**

Each of the lithium secondary batteries of Examples 2-1, 2-2, 2-4, and 2-5 and Comparative Examples 2-1 to 2-4 was charged and discharged to evaluate resistance characteristics and life characteristics using the following method, and the results thereof are presented in Table 2 below.

1) Resistance characteristics: Resistance of the lithium secondary battery was measured by applying a pulse current of 2.5C for a specific time at a state of charge (SOC) of 50% during discharge per cycle while performing charge and discharge cycles under conditions below.

Resistance increase rate: [(resistance value after 200 cycles)/(resistance value after 1 cycle) ] $\times$ 100

2) Life characteristics: The number of cycles, in which the SOC was maintained above 80%, was measured while each lithium secondary battery was charged and discharged in a first cycle and a second cycle at 0.1 C, and was charged at 1 C and discharged at 0.5 C from a third cycle.

Charging conditions: CC(constant current) /CV (constant voltage) (5mV/0.005 C current cut-off) 4.2 V
Discharging conditions: CC(constant current) condition 2.5V

[00159] [Table 2]

| | Resistance (mΩ) | The number of cycles in which the SOC was maintained at 80% |
|---|---|---|
| | | |

| | | 1 time | 50 times | 100 times | 150 times | 200 times | Resistance increase rate (%) | |
|---|---|---|---|---|---|---|---|---|
| Negative electrode | Example 2-1 | 0.88 | 0.88 | 0.95 | 1.05 | 1.23 | 139% | 200 |
| | Example 2-2 | 0.88 | 0.89 | 0.85 | 1.01 | 1.28 | 145% | 200 |
| | Comparative Example 2-1 | 1.47 | 1.87 | 2.10 | 2.15 | 2.33 | 158% | 30 |
| | Comparative Example 2-2 | 1.25 | 1.24 | 1.41 | 1.87 | 2.09 | 167% | 50 |
| Positive electrode | Example 2-4 | 0.87 | 0.87 | 0.88 | 0.90 | 1.01 | 116% | 350 |
| | Example 2-5 | 0.93 | 0.92 | 0.93 | 1.00 | 1.11 | 119% | 250 |
| | Comparative Example 2-3 | 0.98 | 1.10 | 1.17 | 1.25 | 1.48 | 151% | 250 |
| | Comparative Example 2-4 | 0.98 | 1.01 | 1.08 | 1.19 | 1.52 | 155% | 150 |

Referring to Table 2, With respect to the lithium secondary batteries of Examples 2-1 and 2-2 including the negative electrode to which the pre-lithiation method according to the present invention was applied, since initial resistances were lower and resistance increase rates were also lower than those of the lithium secondary batteries of Comparative Examples 2-1 and 2-2 including the negative electrode to which the pre-lithiation method according to the present invention was not applied, it may be confirmed that resistance characteristics were excellent. The reason for this is that the lithium nitride was formed on the surface to act as resistance, and it may be understood that the lithium nitride continuously acted as resistance without being decomposed even during the cycles. That this result was also true for the positive electrode may be confirmed by comparing Examples 2-4 and 2-5 with Comparative Examples 2-3 and 2-4, and particularly, with respect to the positive electrode, there was no extreme difference in initial resistance value like that of the negative electrode, but it may be confirmed that resistance of the comparative example was significantly increased.

With respect to the life characteristics, when comparing Examples 2-1 and 2-2 with Comparative Examples 2-1 and 2-2, it may be understood that the effect was maximized when the method of the present invention was applied to the negative electrode, and even when comparing Examples 2-4 and 2-5 with Comparative Examples 2-3 and 2-4, which were the positive electrodes, although a difference was not as large as that of the negative electrode, it may be confirmed that there was a clear improvement.

[Description of the Symbols]

110: Electrode Current Collector
120, 120': Preliminary Electrode Active Material Layer
300: Transfer Stack
310: Base Film
320: Lithium Metal Layer
321: Lithium Buffer Layer
330: Polymer Layer
400: Electrode Structure
R: Roll

**Claims**

1.  A method of preparing an electrode, the method comprising:

    a step P1 of disposing a transfer stack, which includes a lithium metal layer having a lithium buffer layer formed on both surfaces thereof, on a preliminary electrode active material layer to form an electrode structure such that the lithium buffer layer and the preliminary electrode active material layer are in contact with each other;
    a step P2 of rolling the electrode structure; and
    a step P3 of aging the rolled electrode structure in a nitrogen atmosphere,
    wherein the nitrogen atmosphere is an atmosphere containing 80 vol% or more of nitrogen.

2.  The method of claim 1, wherein the aging of step P4 is performed at 15°C to 40°C.

3.  The method of claim 1, wherein the lithium buffer layer comprises lithium carbonate.

4.  The method of claim 3, wherein the lithium buffer layer further comprises at least one of lithium oxide and lithium hydroxide.

5.  The method of claim 3, wherein the lithium buffer layer is **characterized in that** it does not comprise lithium nitride.

6.  The method of claim 1, wherein the lithium metal layer has a thickness of 1 $\mu$m to 10 um.

7.  The method of claim 1, wherein the lithium buffer layer has a thickness of 50nm or less.

8.  The method of claim 1, wherein the transfer stack is prepared by a method including; a step (S1) of forming the lithium buffer layer by surface treating the both surfaces of the lithium metal layer.

9.  The method of claim 1, wherein the electrode is a negative electrode, and the electrode active material is a negative electrode active material, wherein the negative electrode active material comprises a silicon-based negative electrode active material.

10. An electrode comprising a current collector; an electrode active material layer disposed on the current collector; and a lithium buffer layer disposed on the electrode active material layer,
    wherein the lithium buffer layer comprises at least one of lithium carbonate, lithium oxide, and lithium hydroxide, and does not contain lithium nitride.

11. The electrode of claim 10, further comprising a transfer stack which includes a lithium metal layer having the lithium buffer layer formed on both surfaces thereof; and a preliminary electrode which includes the current collector and a preliminary electrode active material layer disposed on the current collector,
    wherein the electrode comprises an electrode structure in which the lithium buffer layer of the transfer stack and the preliminary electrode active material layer of the preliminary electrode are disposed to be in contact with each other.

12. The electrode of claim 10, wherein the electrode is a negative electrode, and the electrode active material is a negative electrode active material, wherein the negative electrode active material comprises a silicon-based negative electrode active material.

13. A lithium secondary battery comprising a positive electrode, a negative electrode, and a separator disposed between the positive electrode and the negative electrode, wherein the positive electrode or the negative electrode is the electrode of claim 10.

FIG. 1

FIG. 2

FIG. 3

FIG. 4

FIG. 5

FIG. 6

FIG. 7

## INTERNATIONAL SEARCH REPORT

International application No.

**PCT/KR2024/006628**

### A. CLASSIFICATION OF SUBJECT MATTER

**H01M 4/04**(2006.01)i; **H01M 4/38**(2006.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/04(2006.01); H01M 10/052(2010.01); H01M 10/0525(2010.01); H01M 10/0585(2010.01); H01M 4/13(2010.01); H01M 4/139(2010.01); H01M 4/1393(2010.01); H01M 50/409(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극(electrode), 리튬(lithium), 버퍼층(buffer layer), 음극(anode), 제조방법 (manufacturing method), 에이징(aging)

### C. DOCUMENTS CONSIDERED TO BE RELEVANT

| Category* | Citation of document, with indication, where appropriate, of the relevant passages | Relevant to claim No. |
|---|---|---|
| A | KR 10-2022-0061641 A (LG ENERGY SOLUTION, LTD.) 13 May 2022 (2022-05-13)<br>See claim 1. | 1-13 |
| A | KR 10-2019-0083305 A (LG CHEM, LTD.) 11 July 2019 (2019-07-11)<br>See claims 1 and 10. | 1-13 |
| A | JP 2013-084420 A (NISSAN MOTOR CO., LTD.) 09 May 2013 (2013-05-09)<br>See claims 1 and 6. | 1-13 |
| A | KR 10-2019-0108792 A (SAMSUNG SDI CO., LTD.) 25 September 2019 (2019-09-25)<br>See claims 1 and 14. | 1-13 |
| A | KR 10-2022-0025321 A (LG ENERGY SOLUTION, LTD.) 03 March 2022 (2022-03-03)<br>See claims 1, 4 and 7. | 1-13 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 August 2024** | **19 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/006628**

| Patent document cited in search report | | | Publication date (day/month/year) | Patent family member(s) | | | Publication date (day/month/year) |
|---|---|---|---|---|---|---|---|
| KR | 10-2022-0061641 | A | 13 May 2022 | None | | | |
| KR | 10-2019-0083305 | A | 11 July 2019 | CN | 110710031 | A | 17 January 2020 |
| | | | | EP | 3686968 | A1 | 29 July 2020 |
| | | | | EP | 3686968 | B1 | 28 September 2022 |
| | | | | KR | 10-2362887 | B1 | 14 February 2022 |
| | | | | PL | 3686968 | T3 | 27 December 2022 |
| | | | | US | 11973219 | B2 | 30 April 2024 |
| | | | | US | 2020-0067085 | A1 | 27 February 2020 |
| | | | | WO | 2019-135525 | A1 | 11 July 2019 |
| JP | 2013-084420 | A | 09 May 2013 | None | | | |
| KR | 10-2019-0108792 | A | 25 September 2019 | CN | 111868989 | A | 30 October 2020 |
| | | | | EP | 3767725 | A1 | 20 January 2021 |
| | | | | KR | 10-2235277 | B1 | 01 April 2021 |
| | | | | US | 2021-0057702 | A1 | 25 February 2021 |
| | | | | WO | 2019-177296 | A1 | 19 September 2019 |
| KR | 10-2022-0025321 | A | 03 March 2022 | None | | | |

Form PCT/ISA/210 (patent family annex) (July 2022)

**REFERENCES CITED IN THE DESCRIPTION**

**Patent documents cited in the description**

- KR 1020230066491